# EUROPEAN PATENT APPLICATION

(11) **EP 2 453 132 A1**
(43) Date of publication of application: **16.05.2012**
(21) Application number: 10190945.5
(22) Date of filing: 12.11.2010
(51) Int. Cl.: F03D 9/00, H02K 7/18

(54) **Wind turbine**

(71) Applicant: STX Heavy Industries Co., Ltd., Changwon-si Gyeongsangnam-do 641-371 (KR)
(72) Inventor: de Vilder, Gerardus, 3434DP Nieuwegein (NL)
(74) Representative: Uittenbogaart, Gustaaf Adolf

(57) **Abstract**

The invention concerns a wind turbine comprising a generator with a stator mounted in the nacelle for generating electric current and a rotor with a rotor shaft, wherein a rotor ring that is part of the rotor is provided with magnets and the rotor ring can be rotated in the stator with a narrow gap between the magnets and the stator, a rotor flange that is part of the rotor connects the rotor ring and the rotor shaft.

According to the invention the rotor flange comprises first and second plate segments fastened to different circle segments of the inner circumference the rotor ring wherein near the rotor ring the first plate segments and the second plate segments are at a distance of at least 60 % of the width of the rotor ring and longitudinal plates connect the radial edges of the first plate segments and the second plate segments.

## Description

The invention concerns a wind turbine according to the preamble of claim 1. The generators in these wind turbines are known as direct drive generators, as there are no gearboxes between the vanes and the generator. In the known wind turbines of this type, the rotor flange comprises two plates that keep the rotor ring in its circular shape. This makes it difficult to access the connection between the rotor ring and the rotor flange and for larger diameters of the rotor ring, this leads to heavy constructions that make the generator and/or nacelle heavy, which is undesirable.

In order to overcome this disadvantage the wind turbine is according to claim 1. In this way, there is only one rotor flange that is easy to access from both sides so that it is easy to check the connection between the rotor ring and the rotor flange. The first plate segments and the second plate segments alternatively support the sides of the rotor ring over an arc section. Due to the curved shape of the rotor ring, the first plate segments and the second plate segments accurately keep the rotor ring circular so that the narrow gap is constant over the full circumference of the rotor ring. The longitudinal plates strengthen the first plate segments and the second plate segments. This leads to a high quality rotor that is light and easy to check for wear.

In accordance with an embodiment, the wind turbine is according to claim 2. In this way, the longitudinal plates are approximately perpendicular to the first plate segments and second plate segments and stabilize and strengthen the plate segments.

In accordance with an embodiment, the wind turbine is according to claim 3. In this way, area of the rotor ring supported by either a first plate segment or a second plate segment is limited and due to the curved surface of the rotor ring, the stability of the rotor ring remains sufficient at increasing diameter of the rotor ring.

In accordance with an embodiment, the wind turbine is according to claim 4. In this way the first plate segments, the second plate segments and the longitudinal plates can be made of the same material and due to the approximately constant wall thickness there are no stress concentrations and casting the part is possible without cold spots during casting.

In accordance with an embodiment, the wind turbine is according to claim 5. In this way, the first plate segments and the second plate segments are bent along a corner to form parts of the longitudinal plates so that separate longitudinal plates are avoided. This saves additional handling and connecting of the longitudinal plates.

In accordance with an embodiment, the wind turbine is according to claim 6. In this way, it is possible to reduce the length of the arc where a plate segments supports the rotor ring along one side of the rotor ring so that a rotor flange for a rotor of large diameter can be produced from relative thin material.

In accordance with an embodiment, the wind turbine is according to claim 7. In this way, the hub and the rotor flange are connected by welding and it is easy to inspect this connection during use for faults or wear.

The invention concerns a wind turbine according to the preamble of claim 8. The generators in these wind turbines are known as direct drive generators, as there are no gearboxes between the vanes and the generator. The magnets and stator must be cooled and in the known designs, cooling ribs are mounted on the outside circumference of the stator. This appears insufficient for preventing too high temperatures of the magnets. In order to overcome this disadvantage the wind turbine is according to claim 8. In this way, the ventilators create airflow through the narrow gap to cool the permanent magnets and prevent their heating.

The invention is explained with the aid of one or more embodiments using a drawing. In the drawing
Figure 1 shows a schematic view of a wind turbine with a direct driven generator,
Figure 2 shows a detail of a section of the direct driven generator of figure 1, and
Figure 3 shows a perspective view of the rotor of the direct driven generator of figure 1.

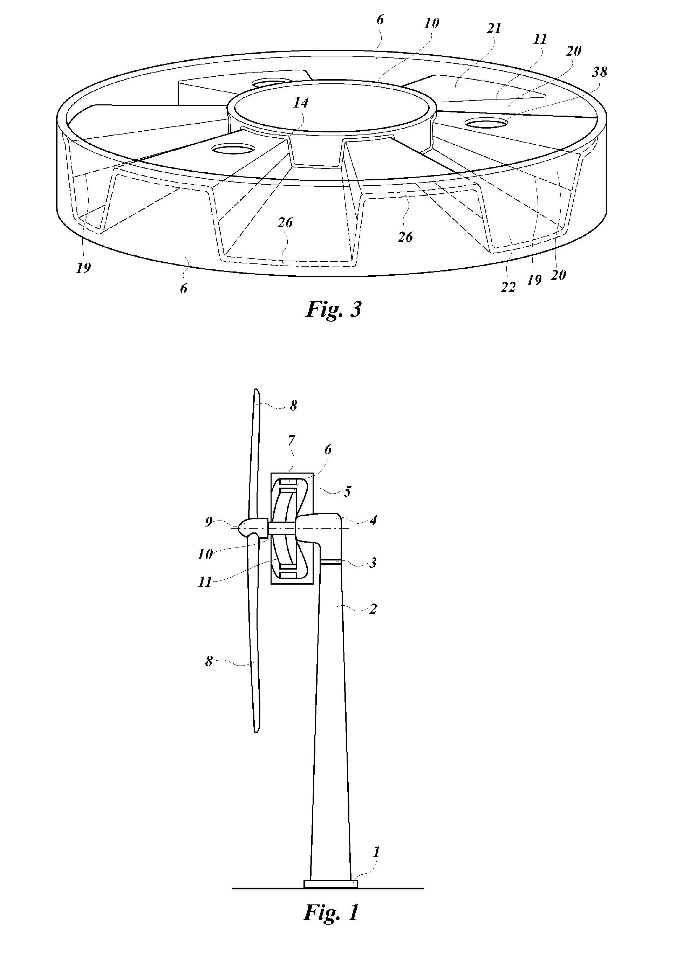

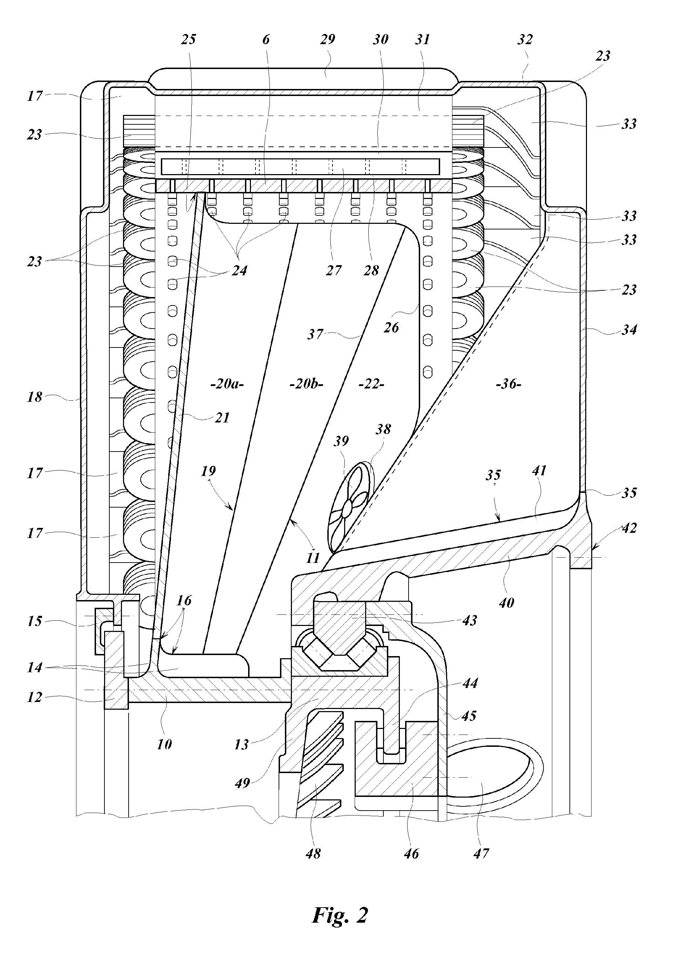

The wind turbine shown in figure 1 has a tower 2 standing on a foundation 1 and supporting a nacelle 4. The nacelle 4 can rotate over a yaw bearing 3 so that a rotation axis of a rotor shaft 10 and a hub 9 with blades 8 can be directed to the wind. A rotor flange 11 connects the rotor shaft 10 with a rotor ring 6. The rotor ring 6 has permanent magnets 27 (see figure 2) on its outer circumference. The permanent magnets 27 rotate inside a stator 7 and generate electric currents in stator coils 23 (see figure 2). A stator support 5 supports the stator 7 on the nacelle 4.

Figure 2 shows a bearing outer support ring 40 that can be connected at mounting surface 42 with the nacelle 4 (not shown). An inside surface of the bearing outer support ring 40 supports a bearing 43. The bearing 43 supports a bearing inner support ring 13 and the rotor shaft 10 connects the bearing inner support ring 13 and an intermediate ring 12. The hub 9 is connected to the intermediate ring 12 and rotates with the bearing inner support ring 13. A brake support 45 is part of the inside of the bearing outer support ring 40 and supports brakes 46. The brakes 46 grip around a brake plate 44 that is part of the bearings inner support ring 13 and can stop the rotation of the rotor shaft 10 and the hub 9 if required. A stiffener ring 49 with brackets 48 reinforces the bearing inner support ring 13 so that it keeps it shape accurately. In the shown embodiment, the rotor shaft 10 is hollow and the intermediate ring 12, the stiffener ring 49, and the brake plate 44 have central openings so that the hub 9 is accessible through the rotor shaft 10.

The outer surface of the bearing outer support ring 40 has a weld nose 41. A weld 35 couples a stiffener plate 36 and a housing plate 34 to the weld nose 41 and the stiffener plate 36 and the housing plate 34 are part of the stator support 5. The stator support 5 further comprises a stator housing 32, brackets 33 for strengthening the stator housing 32, and brackets 17 for coupling a housing plate 18 to the stator housing 32. Stator housing 32 supports stator cores 31 and the stator coils 23 that are coiled around the stator cores 31. A seal 15 seals a circular opening between the housing plate 18 and the intermediate ring 12 so prevents entering of ambient air in the room with the stator coils 23. In the shown embodiment, the seal 15 is at the outside against the intermediate ring 12. In another embodiment, for instance if the room with the stator coils 23 is under overpressure, the seal 15 is at the inside against the intermediate ring 12. A manhole 47 in the bearing outer support ring 40 makes inspection and/or maintenance of the stator possible. There can also be manholes in the housing plate 18 and/or the rotor flange 11.

The rotor ring 6 rotates inside the stator cores 31. Fasteners 24 fasten permanent magnets 27 on the outer circumference of the rotor ring 6 so that there is a small gap 30 between the stator coils 31 and the permanent magnets 27. Instead of the shown permanent magnets 27 in other embodiments electrically excited magnets can be used. An insulation plate 28 separates the rotor ring 6 and the permanent magnets 27. The rotor flange 11 comprises first plate segments 21 and second plate segments 22 connected by longitudinal plates 20. In the shown embodiment, a flat plate is bended at both sides around a corner 37 to form a first plate segment 21 or a second plate segment and at each side half of a longitudinal plate segment 20a or 20b respectively. A weld 19 connects two half longitudinal plate segments 20a and 20b to form a longitudinal plate 20 that is approximately in a plane through a rotation axis of the rotor ring 6 or that makes a small angle with this plane. In another embodiment the plate segments 21, 22 and the longitudinal plates are welded in the corner 37.

A weld 25, which can be a K-weld or a fillet weld, couples the first plates 21, the second plates 22, and the longitudinal plates 20 to the inner circumference of the rotor ring 6. An arc shaped weld 26 of the first plate segment 21 or the second plate segment 22 is at relative small distance of less than 20% of the width of the rotor ring 6 from the edge of the rotor ring 6. Alternatively, the arc shaped welds 26 are in planes that have near the rotor ring 6 a distance of at least 60% or possibly 80% of the width of the rotor ring 6. The arc shaped weld 26 accurately maintains the rotor ring 6 in its circular form so that also with large diameters of the rotor ring 6 the width of the gap 30 is approximately constant. Increasing the number of longitudinal plates 20 is used for decreasing the length of the arc shaped weld 26; the length of the arc shaped weld 26 should be less than twice the width of the rotor ring 6. The rotor shaft 10 has a weld nose 14 and a weld 16 connects the plate segments 21, 22 and the longitudinal plate 20 to the rotor shaft 10. Figure 3 shows the assembled rotor shaft 10, rotor ring 6, and rotor flange 11.

The rotor flange 11 is a fully closed wall with one or more openings 38 with a fan 39. Airflow through the fan 39 also causes airflow through gap 30 and this airflow cools the permanent magnets 27. The stator housing 32 has at its outer circumference cooling ribs 29 that conduct heat to the ambient air. In this way, the cooling ribs 29 remove heat form the stator cores 31.

In the shown embodiment, the rotor flange 11, the rotor shaft 10 and the rotor ring 6 are welded from various parts. These various parts have approximately the same wall thicknesses and/or there are no great variations in the various parts and between the various parts. This is also an advantage if the rotor flange 11, the rotor shaft 10, and the rotor ring 6 are made in one part and cast in a mould.

## Claims

1. Wind turbine comprising a generator with a stator (23,31) for generating electric current and a rotor with a possibly hollow rotor shaft (10), wherein a rotor ring (6) that is part of the rotor is provided with magnets (27) and the rotor ring can be rotated in the stator with a narrow gap (30) between the magnets and the stator, a rotor flange (11) that is part of the rotor connects the rotor ring with the rotor shaft **characterized in that** the rotor flange (11) comprises first plate segments (21) and second plate segments (22) fastened to different circle segments of the inner circumference the rotor ring (6) wherein near the rotor ring the first plate segments and the second plate segments have a distance of at least 60 % of the width of the rotor ring and the rotor flange further comprises longitudinal plates (20) that connect the radial edges of the first plate segments and the second plate segments.

2. Wind turbine according to claim 1 wherein the longitudinal plates (20) are in planes through the rotation axis or make a small angle with these planes.

3. Wind turbine according to claim 1 or 2 wherein there are at least ten longitudinal plates (20).

4. Wind turbine according to claim 1, 2, or 3 wherein the first plate segments (21), the second plate segments (22), and the longitudinal plates (20) have approximately the same thickness and the rotor ring (6) can have approximately the same thickness.

5. Wind turbine according to claim 4 wherein a plate has a corner (37) along one or both sides to form a first plate segment (21) or a second plate segment (22) and part of one or both adjacent longitudinal plates (20a,20b).

6. Wind turbine according to one of the previous claims wherein a weld (16,25) connects the first plate segments (21), the second plate segments (22), and the longitudinal plates (20) with the rotor ring (6) and/or the rotor shaft (10).

7. Wind turbine according to one of the previous claims wherein the rotor shaft (10) is from cast or forged material and has a weld nose (14) on its outer circumference for connecting the first plate segments (21), the second plate segments (22) and the longitudinal plates (20) to the rotor shaft, and wherein the weld nose can have approximately the same thickness as the first plate segments, the second plate segments and the longitudinal plates.

8. Wind turbine comprising a generator with a stator (7) for generating electric current and a rotor with a possibly hollow rotor shaft (10), wherein a rotor ring (6) that is part of the rotor is provided with magnets (27) and the rotor ring can be rotated in the stator with a narrow gap (30) between the magnets and the stator, a rotor flange (11) that is part of the rotor connects the rotor ring with the rotor shaft **characterized in that** the rotor flange (11) closes the area between the rotor ring (6) and the rotor shaft (10) and is provided with one or more openings (38) with ventilators (39) to create an airflow through the narrow gap (30) between the magnets and the stator.
